# EUROPEAN PATENT APPLICATION

(11) **EP 2 613 238 A2**
(43) Date of publication of application: **10.07.2013**
(21) Application number: 12198292.0
(22) Date of filing: 19.12.2012
(51) Int. Cl.: G06F 3/0481, G06F 3/0486, G06F 3/0488

(54) **Method and apparatus for managing icon in portable terminal**

(30) Priority: 04.01.2012 KR 20120000962
(71) Applicant: Samsung Electronics Co., Ltd, Gyeonggi-do 443-742 (KR)
(72) Inventor: Lee, Hye-Jin, Gyeonggi-do (KR)
(74) Representative: Jenkins, Richard Gavin

(57) **Abstract**

A method and an apparatus for managing icons in a portable terminal are provided. The method includes sensing a touch of an icon by a user, sensing a drag of the icon in a state in which the touch is held, selecting at least one icon positioned in a path along which the icon is dragged, creating a folder including the icon touched by the user and the selected at least one icon, and displaying an icon representing the created folder.

## Description

### BACKGROUND OF THE INVENTION

### 1. Field of the Invention:

The present invention relates to a portable terminal. More particularly, the present invention relates to a method and apparatus for managing icons in the portable terminal.

### 2. Description of the Related Art:

With the sudden increase of use of portable terminals, portable terminal providers are competitively developing portable terminals having convenient and various supplementary functions to ensure wide adoption among users. In particular, recently, the portable terminal providers are racing to provide a variety of applications providing various functions for users' conveniences and leisure lives. Accordingly, a portable terminal may have at least a few of applications or at most dozens of applications.

One disadvantage in a case in which the portable terminal has dozens of applications is that a user may find it difficult to find out a desired application among the dozens of applications. Therefore, the portable terminal according to the related art manages a plurality of applications on a per-folder basis, thereby facilitating a user's access to each application. For example, the user of the portable terminal creates a game folder and a life folder, adds icons representing a plurality of game applications to the game folder, and adds icons representing scheduler, wake-up morning call, and traffic guidance related applications related to user's everyday life to the life folder, thereby being able to have easy access to the corresponding application through the folders.

In detail, the portable terminal according to the related art provides a function of, creating or deleting a folder according to user control, and a function of adding an application that a user wants to a specific folder or a function of moving a specific application outside the specific folder. For example, the portable terminal according to the related art is configured such that when the user touches and drags an icon representing a 1st application to a game folder, the 1st application is added to the game folder. In contrast, when the user touches and drags the icon of the 1st application included within the game folder of the portable terminal, to a region outside the game folder, the 1st application is deleted from the game folder and moved outside the game folder. But, this method has an inconvenience in that the method was previously used to perform a separate procedure of creating a folder through menu selection and, because the method can move only one application one time, the method has an inconvenience in that the method requires a user to repeat several times an operation of touching and carrying desired application icons to a corresponding folder one by one to move a plurality of application icons to a specific folder.

Accordingly, there is a need to propose a method and apparatus for easily managing icons representing various applications in a portable terminal.

The above information is presented as background information only to assist with an understanding of the present disclosure. No determination has been made, and no assertion is made, as to whether any of the above might be applicable as prior art with regard to the present invention.

### SUMMARY OF THE INVENTION

Aspects of the present invention are to address at least the above-mentioned problems and/or disadvantages and to provide at least the advantages described below. Accordingly, an aspect of the present invention is to provide a method and apparatus for managing icons in a portable terminal.

Another aspect of the present invention is to provide a method and apparatus for creating a folder including a plurality of icons through one-time touch operation in a portable terminal.

Another aspect of the present invention is to provide a method and apparatus for combining folders including at least one icon in a portable terminal.

Another aspect of the present invention is to provide a method and apparatus for separating a plurality of icons included within a folder, and including the separated icons in a new folder in a portable terminal.

The above aspects are achieved by providing a method and apparatus for managing icons in a portable terminal.

In accordance with an aspect of the present invention, a method for managing icons in a portable terminal is provided. The method includes sensing a touch of an icon by a user, sensing a drag of the icon in a state in which the touch is held, selecting at least one icon positioned in a path along which the icon is dragged, creating a folder including the icon touched by the user and the selected at least one icon, and displaying an icon representing the created folder.

In accordance with another aspect of the present invention, an apparatus for managing icons in a portable terminal is provided. The apparatus includes a touch sensor, a display unit, and a controller. The touch sensor senses a user's touch operation. The display unit displays at least one icon. The controller controls to sense a touch of an icon by the user through touch sensor, to sense a drag of the icon in a state in which the touch is held, to select at least one icon positioned in a path along which the icon is dragged, to create a folder including the icon touched by the user and the selected at least one icon, and to display an icon representing the created folder.

In accordance with another aspect of the present invention, an electronic device is provided. The electronic device includes means for detecting a touch of an icon by a user, means for detecting a drag of the icon in a state in which the touch is maintained, means for selecting at least one icon positioned in a path along which the icon is dragged, and means for displaying an icon representing a created folder comprising the icon touched by the user and the selected at least one icon.

Other aspects, advantages, and salient features of the invention will become apparent to those skilled in the art from the following detailed description, which, taken in conjunction with the annexed drawings, discloses exemplary embodiments of the invention.

### BRIEF DESCRIPTION OF THE DRAWINGS

The above and other objects, features and advantages of certain exemplary embodiments of the present invention will be more apparent from the following description taken in conjunction with the accompanying drawings, in which:

FIG. 1 is a block diagram illustrating a construction of a portable terminal according to an exemplary embodiment the present invention;

FIGs. 2A and 2B are a flowchart illustrating a procedure of creating a folder including a plurality of icons in a portable terminal according to an exemplary embodiment of the present invention;

FIGs. 3A to 3D are diagrams illustrating a screen configuration of creating a folder including a plurality of icons in a portable terminal according to an exemplary embodiment of the present invention;

FIGs. 4A to 4C are diagrams illustrating a screen configuration of creating a folder including a plurality of icons in a portable terminal according to an exemplary embodiment of the present invention;

FIGs. 5A to 5C are flowcharts illustrating a procedure of managing icons within a folder in a portable terminal according to an exemplary embodiment of the present invention;

FIGs. 6A to 6D are diagrams illustrating a screen configuration of managing icons within a folder in a portable terminal according to an exemplary embodiment of the present invention;

FIGs. 7A to 7D are diagrams illustrating a screen configuration of managing icons within a folder in a portable terminal according to an exemplary embodiment of the present invention;

FIGs. 8A and 8B are a flowchart illustrating a procedure of combining folders in a portable terminal according to an exemplary embodiment of the present invention;

FIGs. 9A to 9D are diagrams illustrating a screen configuration of showing a combination of folders in a portable terminal according to an exemplary embodiment of the present invention; and

FIGs. 10A and 10B are diagrams illustrating a screen configuration of showing a combination of folders in a portable terminal according to an exemplary embodiment of the present invention.

Throughout the drawings, it should be noted that like reference numbers are used to depict the same or similar elements, features, and structures.

### DETAILED DESCRIPTION OF THE PREFERRED EMBODIMENTS

The following description with reference to the accompanying drawings is provided to assist in a comprehensive understanding of exemplary embodiments of the invention as defined by the claims and their equivalents. It includes various specific details to assist in that understanding but these are to be regarded as merely exemplary. Accordingly, those of ordinary skill in the art will recognize that various changes and modifications of the embodiments described herein can be made without departing from the scope and spirit of the invention. In addition, descriptions of well-known functions and constructions may be omitted for clarity and conciseness.

The terms and words used in the following description and claims are not limited to the bibliographical meanings, but, are merely used by the inventor to enable a clear and consistent understanding of the invention. Accordingly, it should be apparent to those skilled in the art that the following description of exemplary embodiments of the present invention is provided for illustration purpose only and not for the purpose of limiting the invention as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

Preferred exemplary embodiments of the present invention will be described herein below with reference to the accompanying drawings. In the following description, well-known functions or constructions are not described in detail since they would obscure the invention in unnecessary detail. And, terms described below, which are defined considering functions in the present invention, can be different depending on user and operator's intention or practice. Therefore, the terms should be defined on the basis of the disclosure throughout this specification.

A method and apparatus for managing icons in a portable terminal according to the present invention are described below. Below, the portable terminal described in exemplary embodiments of the present invention means electronic devices with touch sensors such as mobile phones, tablet Personal Computers (PCs), notebook PCs, and the like. However, the present invention shall be applicable to all electronic devices with touch sensors in the same manner without being limited to the portable terminal. According to exemplary embodiments of the present invention, icon may correspond to all of an application icon and a folder icon that includes the application icons. Below, for description convenience, the application icon is called an "icon", and the folder icon is called a "folder".

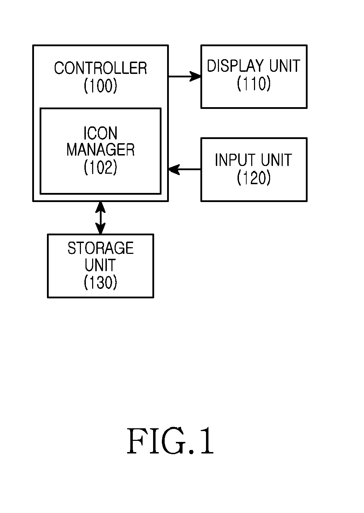

FIG. 1 is a block diagram illustrating a construction of a portable terminal according to an exemplary embodiment of the present invention. The portable terminal may be an electronic device such as, for example, a laptop, a smart phone, a net book, a mobile internet device, an ultra mobile PC, a tablet personal computer, a mobile telecommunication terminal, PDA having a camera and the like herein, just to name some of the possibilities.

Referring to FIG. 1, the portable terminal includes a controller 100, a display unit 110, an input unit 120, and a storage unit 130. The controller 100 includes an icon manager 102.

The controller 100 performs control and processing of a general operation of the portable terminal. Particularly, by including the icon manager 102 according to exemplary embodiments of the present invention, the controller 100 manages movement and display positions of icons representing various applications included in the portable terminal. For example, the controller 100 performs control and processing for performing a function of moving and displaying an icon according to user's touch, drag and touch-release operations sensed through the input unit 120, and folder creation, folder combination, folder separation and the like according to the icon movement.

In detail, the icon manager 102 controls and processes a function for sensing an operation in which a user touches an icon, drags the touched icon to a position in which another icon has been displayed, stays at the drag position for a threshold time or longer, and releases the touch, creating a folder including the touched icon and the another icon, and displaying an icon representing the created folder at the position. At this time, the icon manager 102 controls and processes a function for, when the user touches and drags the icon and stays successively at each position of a plurality of other icons for a threshold time or longer, creating a folder including all of the touched icon and the plurality of other icons, and for displaying an icon representing the created folder at a corresponding position. Here, the corresponding position in which the folder icon is displayed may be set according to user's control, or may be set to a position in which the user touch is released or a position in which the last icon is selected according to a user touch-and-drag operation.

Also, the icon manager 102 controls and processes a function for sensing an operation in which a user touches an icon displayed within a specific folder, drags the touched icon to a position in which another icon within the specific folder is displayed, stays at the position for a threshold time or longer, and releases the touch, and for creating and displaying a folder including the touched icon and the another icon. At this time, the icon manager 102 controls and processes a function for, when the user touches the icon displayed within the specific folder, drags the touched icon, and stays at each position of a plurality of other icons within the specific folder for a threshold time or longer, creating and displaying a new folder including all of the touched icon and the plurality of other icons. At this time, the icon manager 102 may separate the touched icon and the other icons from the specific folder and create the new folder in a region (or a parent region, a parent path, or a parent folder) outside the specific folder, or may create the new folder within the specific folder. For example, when the specific folder is included in a background screen, the icon manager 102 can create the new folder in a background screen region.

Also, the icon manager 102 controls and processes a function for sensing an operation in which a user touches a specific folder icon, drags the touched folder icon to a position in which another folder icon has been displayed, stays at the position for a threshold time or longer, and releases the touch, and for creating and displaying a parent folder including the touched folder icon and the another folder icon. At this time, the icon manager 102 controls and processes a function for, when the user touches the specific folder icon, drags the touched folder icon, and stays successively at each position of a plurality of other folder icons for a threshold time or longer, creating and displaying a new folder including all of the touched folder icon and the plurality of other folder icons. At this time, instead of creating the new folder including the touched folder icon and the other folder icons, the icon manager 102 may combine the touched folder and the other folders and create a new folder including a plurality of icons included within the corresponding folders.

Also, the icon manager 102 controls and processes a function for, when a user touches and drags a specific icon, moving and displaying the icon according to a dragged position. Particularly, the icon manager 102 controls and processes a function for deciding, as an additional selection icon, an icon corresponding to a position at which the touched and dragged icon stays for a threshold time or longer and then, displaying the initially touched icon and the additional selection icon together according to a user's drag position. Through this, the icon manager 102 can show the user which icons have been selected currently. Accordingly, there is an effect in which the user can manage icons more intuitively.

Also, the icon manager 102 controls and processes a function for, while a user touches and drags a specific icon or folder icon, changing a shape, color and size of the touched icon or generating a separate animation effect to show that it is operating in an icon management mode. For example, while a specific icon is touched and dragged, the icon manager 102 can add a magnet-shape image to the specific icon and display the specific icon with the magnet-shape image added. Through this, the icon manager 102 can provide a user with an effect of looking as if one icon draws another icon corresponding to a movement position and moves together with the another icon. Accordingly, the user can manage the icons more intuitively.

Also, the icon manager 102 controls and processes a function for, at the time of creating a folder according to a user touch operation, setting a name of the created folder. For example, the icon manager 102 may set the name of the created folder on a basis of a name of an initially selected icon or folder. For another example, when a parent folder of a selected icon or folder exists, the icon manager 102 can set the name of the created folder on a basis of a name of the parent folder. Undoubtedly, at this time, it is natural that the name of the created folder can be set and changed by a user.

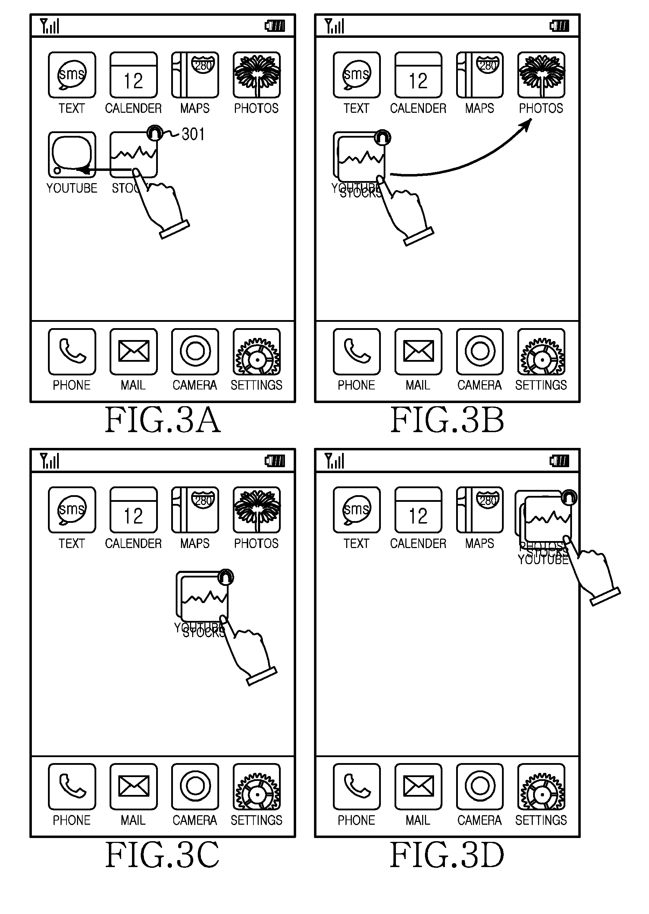

The display unit 110 displays various status information generated during an operation of the portable terminal, numerals, characters, and images. Particularly, the display unit 110 displays screens that show events occurring according to icon touch and drag as illustrated in FIGS. 3, 4, 6, 7, 9, and 10 below.

The input unit 120 receives an input of data from a user and provides the data to the controller 100. The input unit 120 can include at least one function key and provide the controller 100 with data corresponding to a key pressed by the user. Particularly, according to the present invention, the input unit 120 includes a touch sensor (not shown), and senses a user's touch and provides the controller 100 with coordinate data corresponding to a position at which the user touches.

The storage unit 130 stores various data and programs necessary for an operation of the portable terminal. Particularly, the storage unit 130 stores information about a newly created folder according to the control of the controller 100. For example, the storage unit 130 stores a storage path of the created folder, a name of the created folder, and icon information included in the created folder.

The method described above in relation with FIG. 1 under of the present invention may be provided as one or more instructions in one or more software modules stored in the respective portable terminals.

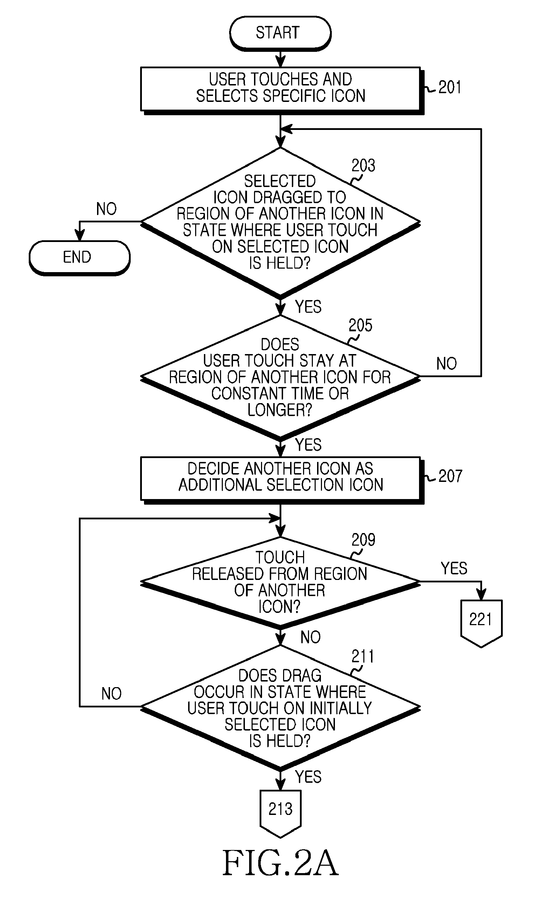

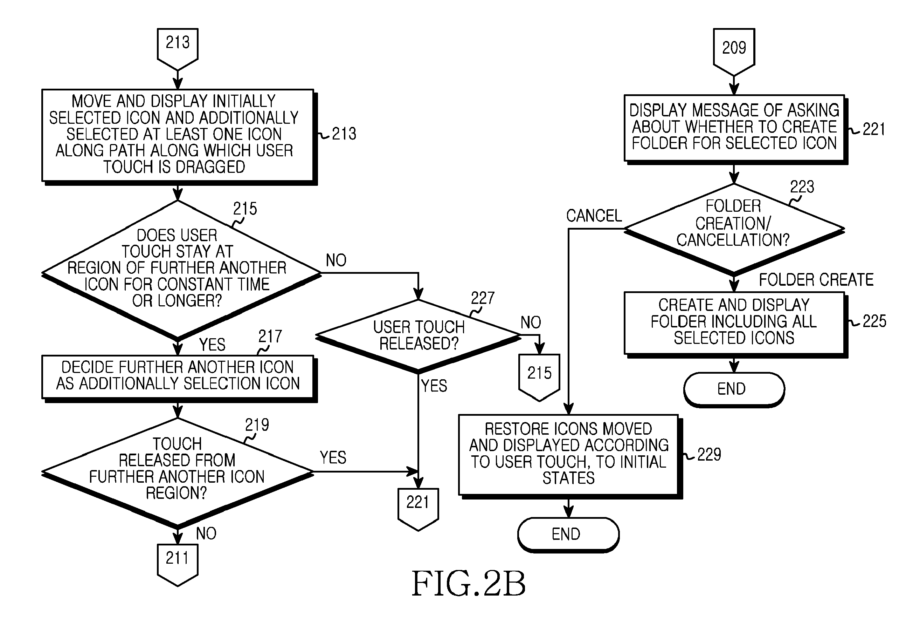

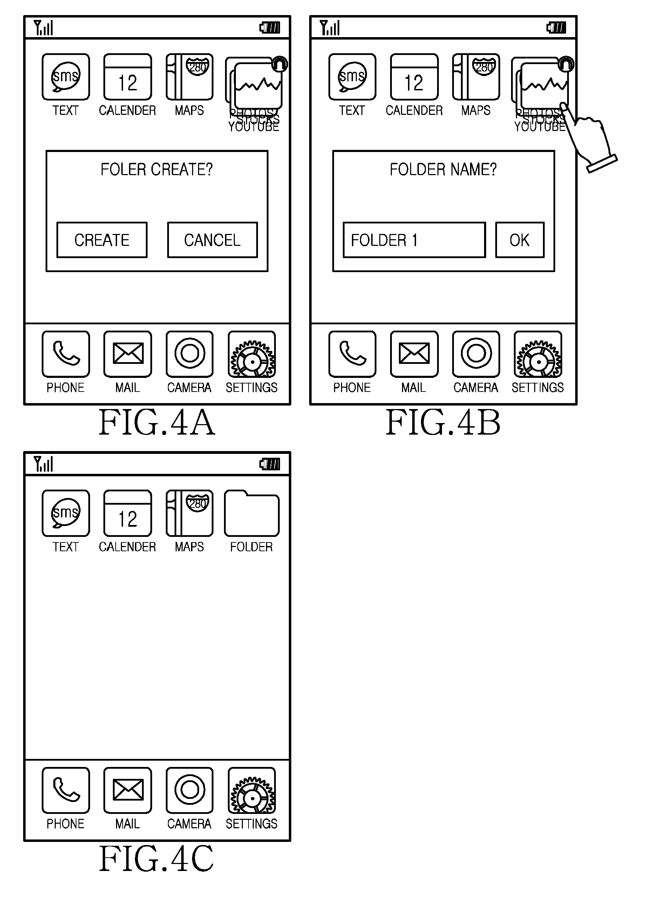

FIGs. 2A and 2B illustrate a procedure of creating a folder including a plurality of icons in a portable terminal according to an exemplary embodiment of the present invention. Also, FIGs. 3A to 3D and 4A to 4C illustrate a screen configuration of creating a folder including a plurality of icons in a portable terminal according to an exemplary embodiment of the present invention. The following description is made for the operation procedure of the portable terminal illustrated in FIGs. 2A and 2B by way of an example of FIGs. 3A to 3D and 4A to 4C.

As illustrated in FIGS. 2A and 2B, if a user touches and selects a specific icon in step 201, the portable terminal proceeds to step 203. In step 203, the portable terminal (e.g., the controller) determines whether the selected icon is dragged to a region of another icon in a state in which the user touch on the selected icon is held. For example, the portable terminal determines whether , after the user touches an icon "Stocks" as illustrated in FIG. 3A, the user drags the icon "Stocks" to a region at which an icon "YouTube" has been displayed as illustrated in FIG. 3B. If it is determined in step 203 that the selected icon is not dragged to the region of the another icon, the portable terminal terminates an algorithm according to exemplary embodiments of the present invention.

In contrast, if it is determined in step 203 that the selected icon is dragged to the region of the another icon, the portable terminal proceeds to step 205 and determines whether the user touch stays at the region of the another icon for a constant time or longer. For example, the portable terminal determines whether the user stays for a preset threshold time or longer in a state in which the user drags the icon "Stocks" to the region at which the icon "YouTube" has been displayed as illustrated in FIG. 3B. If it is determined in step 205 that the user touch does not stay at the region of the another icon for the constant time or longer, the portable terminal returns to step 203 and again performs the subsequent steps. For example, when the user drags the icon "Stocks" and just passes without staying at the region at which the icon "YouTube" has been displayed, the portable terminal can determine whether the user drags the icon "Stocks" to a region at which a further another icon has been displayed.

In contrast, if it is determined in step 205 that the user touch stays at the region of the another icon for the constant time or longer, the portable terminal proceeds to step 207 and decides the another icon as an additional selection icon.

After that, the portable terminal proceeds to step 209 and determines whether the user touch is released from the region of the another icon. If it is determined in step 209 that the user touch is released from the region of the another icon, the portable terminal goes directly to step 221 below.

In contrast, if it is determined in step 209 that the user touch is not released from the region of the another icon, in step 211, the portable terminal determines whether drag occurs in a state in which the user touch on the initially selected icon is held. For example, the portable terminal determines whether drag occurs again to a further another region in the state in which the user drags the icon "Stocks" to the region at which the icon "YouTube" has been displayed as illustrated in FIG. 3B. If it is determined in step 211 that the drag does not occur in the state in which the user touch on the initially selected icon is held, the portable terminal returns to step 209 and again performs the subsequent steps.

In contrast, if it is determined in step 211 that the drag occurs in the state in which the user touch on the initially selected icon is held, the portable terminal proceeds to step 213. In step 213, the portable terminal moves and displays the initially selected icon and the additionally selected at least one icon along a path along which the user touch is dragged. For example, when drag again occurs in an arrow direction in the state in which the user drags the icon "Stocks" to the region at which the icon "YouTube" has been displayed as illustrated in FIG. 3B, the portable terminal can move and display the initially selected icon "Stocks" and the additionally selected icon "YouTube" according to a drag position as illustrated in FIG. 3C.

Next, in step 215, the portable terminal determines whether the user touch stays at a region of a further another icon for a constant time or longer. For example, the portable terminal determines whether the user stays for a preset threshold time or longer in a state in which the user drags the icon "Stocks" and the icon "YouTube" to a region at which an icon "Photos" has been displayed as illustrated in FIG. 3D. If it is determined in step 215 that the user touch does not stay at the region of the further another icon for the constant time or longer, the portable terminal proceeds to step 227 and determines whether the user touch is released from the region of the further another icon. At this time, if the user touch is not released from the region of the further another icon, the portable terminal returns to step 215 and again performs the subsequent steps while, if the user touch is released from the region of the further another icon, the portable terminal goes directly to step 221.

In contrast, if it is determined in step 215 that the user touch stays at the region of the further another icon for the constant time or longer, in step 217, the portable terminal decides the further another icon as an additional selection icon. For example, when the user drags the icon "Stocks" and the icon "YouTube" to the region at which the icon "Photos" has been displayed and stays at the region at which the icon "Photos" has been displayed for a preset threshold time or longer, the portable terminal decides that the icon "Photos" is additionally selected, further to the initially selected icon "Stocks" and the additionally selected icon "YouTube".

After that, in step 219, the portable terminal determines whether the user touch is released from the further another icon region. If it is determined in step 219 that the user touch is not released from the further another icon region, the portable terminal returns to step 211 and again performs the subsequent steps.

In contrast, if it is determined in step 219 that the user touch is released from the further another icon region, in step 221, the portable terminal displays a message of asking whether to create a folder for the selected icons and, in step 223, the portable terminal determines whether folder creation is decided or if folder creation cancellation is decided according to user control. For example, as illustrated in FIG. 4A, at a time the user touch is released, the portable terminal can display a message of requesting a user to decide folder creation or non-creation. If it is determined in step 223 that the folder creation cancellation is decided according to the user control, the portable terminal proceeds to step 229 and restores the icons moved according to the user touch-and-drag, to initial states. For example, the portable terminal displays the initially selected icon and the additionally selected icons in initial positions as illustrated in FIG. 3A.

In contrast, if it is determined in step 223 that the folder creation is decided according to the user control, the portable terminal proceeds to step 225 and creates a folder including all the selected icons, and displays an icon representing the created folder. At this time, to set a name of the created folder, the portable terminal can display a message of requesting name setting to a user. At this time, for the sake of user convenience, the portable terminal can temporarily decide a folder name according to a preset scheme, display the temporarily decided folder name and then, create a folder in the displayed name or create a folder in a name that the user sets himself/herself according to user control. For example, as illustrated in FIG. 4B, the portable terminal can temporarily set a folder name to "folder 1" according to a preset scheme and then, display a folder name setting window including the "folder 1". At this time, the folder name can be changed into "Folder" by the user. Accordingly, the portable terminal can create a folder including the icons "Stocks", "YouTube", and "Photos", set a name of the created folder to "Folder", and display a folder icon "Folder" as illustrated in FIG. 4C. At this time, the icon representing the created folder can be displayed in the region of the last selected icon or the region at which the user touch is released, or can be displayed successively or randomly in a region at which no icon has been displayed.

In FIG. 2 above, while a user touches and drags an icon, the portable terminal can change a shape, color and size of the touched icon or generate a separate animation effect to show that the portable terminal is operating in an icon management mode. For example, as illustrated in FIGs. 3 and 4, while the icon "Stocks" is touched and dragged, the portable terminal can add a magnet-shaped image 301 to the icon "Stocks" and display the icon "Stocks" with the magnet-shape image 301 added. Through this, the portable terminal can provide an effect of looking as if the icon "Stocks" draws the icons "YouTube" and "Photos" corresponding to the moved positions and moves together with the icons "YouTube" and "Photos". According to exemplary embodiments of the present invention, the magnet-shaped image 301 may be replaced with another image that is representative of the portable terminal operating in an icon management mode.

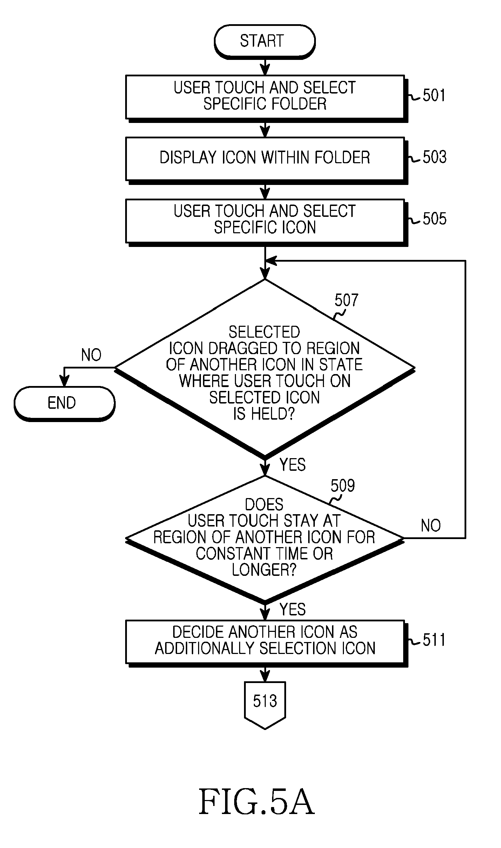

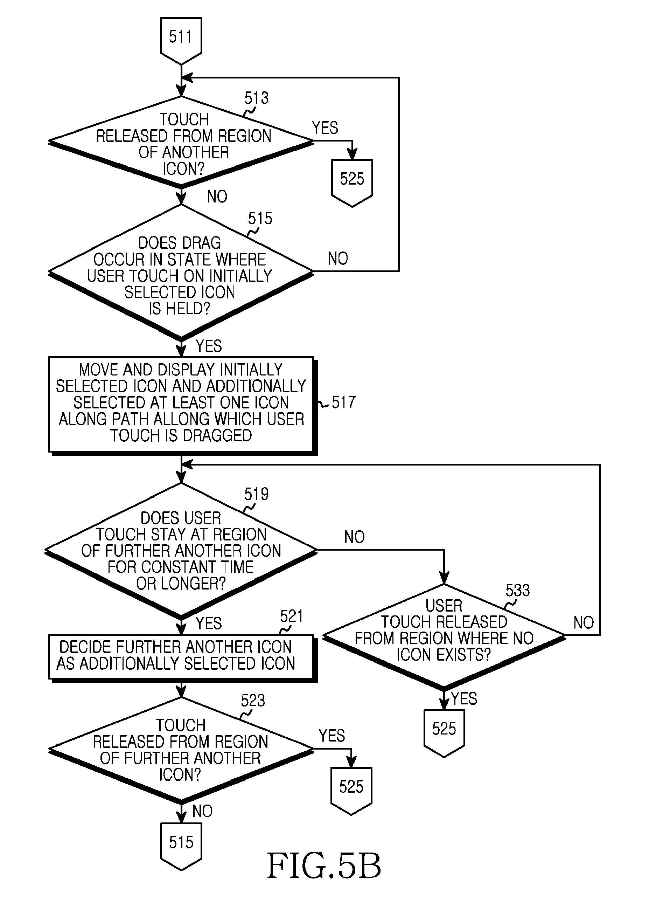

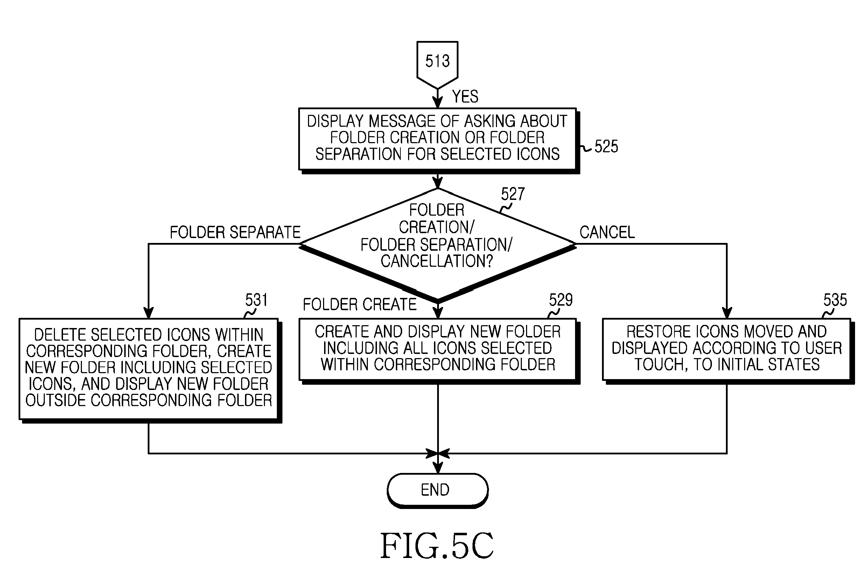

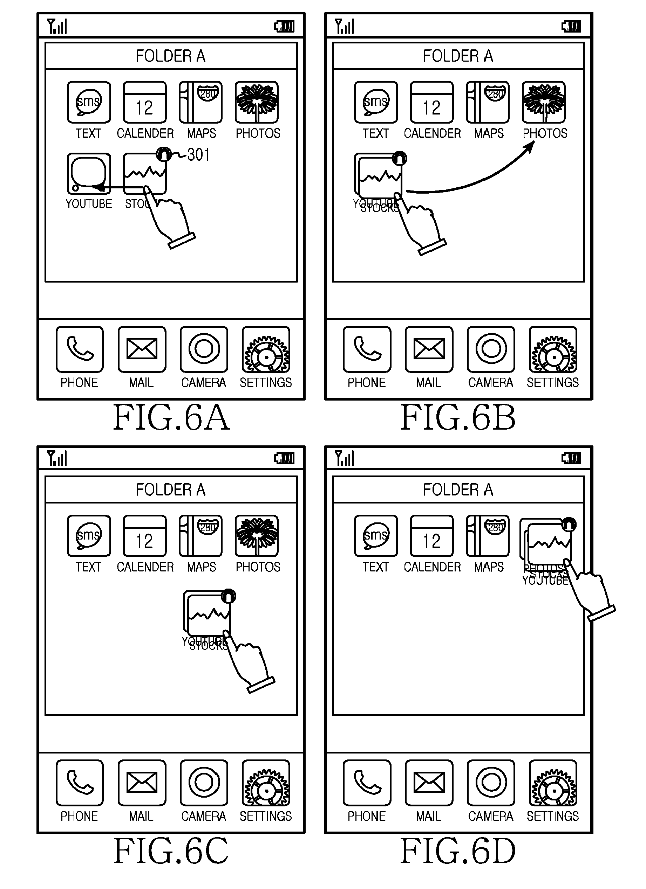

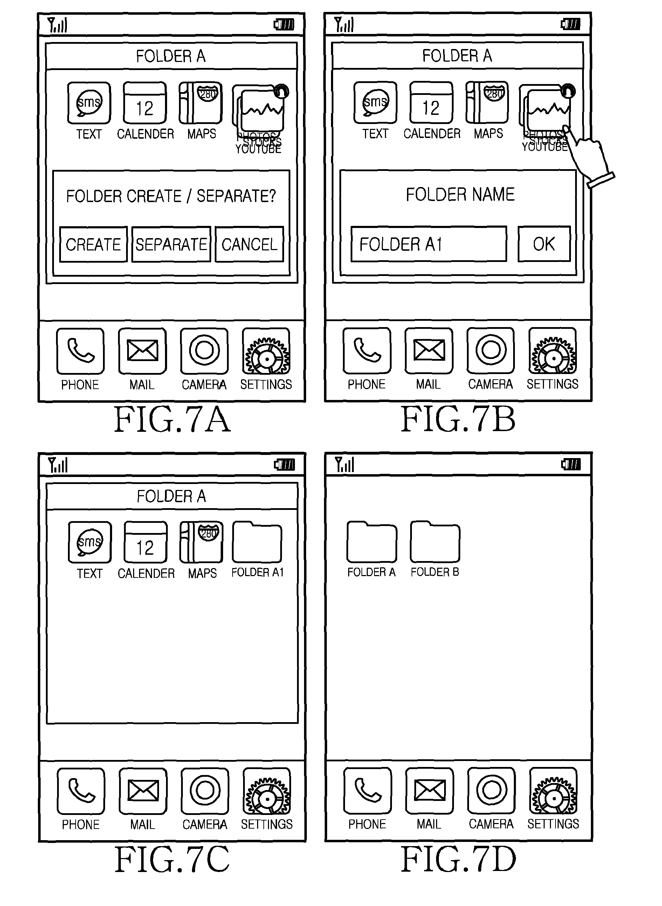

FIGs. 5A to 5C illustrate a procedure of managing icons within a folder in a portable terminal according to an exemplary embodiment of the present invention. Also, FIGs. 6 and 7 illustrate a screen configuration of managing icons within a folder in a portable terminal according to an exemplary embodiment of the present invention. The following description is made for the operation procedure of the portable terminal illustrated in FIGs. 5A to 5C by way of an example of FIGs. 6 and 7.

As illustrated in FIGs. 5A to 5C, if a user touches and selects a specific folder in step 501, the portable terminal proceeds to step 503. In step 503, the portable terminal displays icons included in the selected folder. Here, it is assumed that the user just releases a touch after touching a folder.

After that, the portable terminal proceeds to step 505. If the user touches and selects a specific icon among the icons within the folder in step 505, the portable terminal proceeds to step 507. In step 507, the portable terminal determines whether the selected icon is dragged to a region of another icon in a state in which the user touch on the selected icon is held. For example, the portable terminal determines whether, after the user touches an icon "Stocks" among icons included in "Folder A" as illustrated in FIG. 6A, the user drags the icon "Stocks" to a region at which an icon "YouTube" has been displayed as illustrated in FIG. 6B. If it is determined in step 507 that the selected icon is not dragged to the region of the another icon, the portable terminal terminates an algorithm according to the present invention.

In contrast, if it is determined in step 507 that the selected icon is dragged to the region of the another icon, the portable terminal proceeds to step 509. In step 509, the portable terminal determines whether the user touch stays at the region of the another icon for a constant time or longer. For example, the portable terminal determines whether the user stays for a preset threshold time or longer in a state in which the user drags the icon "Stocks" to the region at which the icon "YouTube" has been displayed as illustrated in FIG. 6B. If it is determined in step 509 that the user touch does not stay at the region of the another icon for the constant time or longer, the portable terminal returns to step 507 and again performs the subsequent steps. For example, when the user drags the icon "Stocks" and just passes without staying at the region at which the icon "YouTube" has been displayed, the portable terminal can determine whether the user drags the icon "Stocks" to a region at which a further another icon has been displayed.

In contrast, if it is determined in step 509 that the user touch stays at the region of the another icon for the constant time or longer, the portable terminal proceeds to step 511. In step 511, the portable terminal decides the another icon as an additional selection icon.

After that, the portable terminal proceeds to step 513. In step 513, the portable terminal determines whether the user touch is released from the region of the another icon. If it is determined in step 513 that the user touch is released from the region of the another icon, the portable terminal goes directly to step 525 below.

In contrast, if it is determined in step 513 that the user touch is not released from the region of the another icon, in step 515, the portable terminal determines whether drag occurs in a state in which the user touch on the initially selected icon is held. For example, the portable terminal determines whether drag occurs again to a further another region in the state in which the user drags the icon "Stocks" to the region at which the icon "YouTube" has been displayed as illustrated in FIG. 6B. If it is determined in step 515 that the drag does not occur in the state in which the user touch on the initially selected icon is held, the portable terminal returns to step 513 and again performs the subsequent steps.

In contrast, if it is determined in step 515 that the drag occurs in the state in which the user touch on the initially selected icon is held, the portable terminal proceeds to step 517. In step 517, the portable terminal moves and displays the initially selected icon and the additionally selected at least one icon along a path along which the user touch is dragged. For example, when drag again occurs in an arrow direction in the state in which the user drags the icon "Stocks" to the region at which the icon "YouTube" has been displayed as illustrated in FIG. 6B, the portable terminal can move and display the initially selected icon "Stocks" and the additionally selected icon "YouTube" according to a drag position as illustrated in FIG. 6C.

Next, the portable terminal proceeds to step 519. In step 519, the portable terminal determines whether the user touch stays at a region of a further another icon for a constant time or longer. For example, the portable terminal determines whether the user stays for a preset threshold time or longer in a state in which the user drags the icon "Stocks" and the icon "YouTube" to a region at which an icon "Photos" has been displayed as illustrated in FIG. 6D. If it is determined in step 519 that the user touch does not stay at the region of the further another icon for the constant time or longer, the portable terminal proceeds to step 533 and determines whether the user touch is released from a region at which no icon exists. At this time, if the user touch is not released from the region at which no icon exists, the portable terminal returns to step 519 and again performs the subsequent steps while, if the user touch is released from the region at which no icon exists, the portable terminal goes directly to step 525.

In contrast, if it is determined in step 519 that the user touch stays at the region of the further another icon for the constant time or longer, the portable terminal proceeds to step 521. In step 521, the portable terminal decides the further another icon as an additional selection icon. For example, when the user drags the icon "Stocks" and the icon "YouTube" to the region at which the icon "Photos" has been displayed, and stays at the region at which the icon "Photos" has been displayed for a preset threshold time or longer, the portable terminal decides that the icon "Photos" is additionally selected, further to the initially selected icon "Stocks" and the additionally selected icon "YouTube".

After that, in step 523, the portable terminal determines whether the user touch is released from the further another icon region. If it is determined in step 523 that the user touch is not released from the further another icon region, the portable terminal returns to step 515 and again performs the subsequent steps.

In contrast, if it is determined in step 523 that the user touch is released from the further another icon region, the portable terminal proceeds to step 525. In step 525, the portable terminal displays a message of asking about whether to create a folder for the selected icons or whether to separate the selected icons into another folder. Next, the portable terminal proceeds to step 527. In step 527, the portable terminal determines whether folder creation is decided, if folder separation is decided or if cancellation is decided according to user control. For example, as illustrated in FIG. 7A, the portable terminal can display a message of requesting a user to decide folder creation, folder separation or cancellation at a time the user touch is released.

If it is determined in step 527 that the folder creation is decided according to the user control, the portable terminal proceeds to step 529 and creates a new folder including all the selected icons, and displays an icon representing the created folder within the folder selected in step 501. At this time, to set a name of the created folder, the portable terminal can display a message of requesting name setting to a user. Particularly, the portable terminal can temporarily set a name of a folder to be created on a basis of a name of a parent folder. For example, by adding a preset numeral, character or symbol to the name of the parent folder, the portable terminal can temporarily set the name of the folder to be created. For example, as illustrated in FIG. 7B, because the name of the parent folder is "Folder A", the portable terminal can temporarily set a name of a folder to be newly created to "Folder A1" and then, display a folder name setting window including the "Folder A1". At this time, if the user decides to create a folder in the name of "Folder A1", the portable terminal can create a folder including the icons "Stocks", "YouTube", and "Photos", set a name of the created folder to "Folder A1", and display an icon "Folder A1" as illustrated in FIG. 7C. At this time, the icon representing the created folder can be displayed in a region of the last selected icon or the region at which the user touch is released, or can be displayed successively or randomly in a region at which no icon has been displayed.

In contrast, if it is determined in step 527 that the folder separation is decided according to the user control, the portable terminal proceeds to step 531. In step 531, the portable terminal deletes all the selected icons from a corresponding folder, creates a new folder including all the selected icons, and displays the created folder outside the corresponding folder. At this time, to set a name of the created folder, the portable terminal can display a message of requesting name setting to a user. Particularly, the portable terminal can temporarily set a name of a folder to be created on a basis of a name of a parent folder. For example, by adding a preset numeral, character or symbol to the name of the parent folder or changing a numeral, character or symbol included in the name of the parent folder, the portable terminal can temporarily set the name of the folder to be created. For example, as illustrated in FIG. 7B, because the name of the parent folder is "Folder A", the portable terminal can temporarily set a name of a folder to be newly created to "Folder B" and then, display a folder name setting window including the "Folder B". At this time, if the user decides to create a folder in the name of "Folder B", the portable terminal can create a folder including the icons "Stocks", "YouTube", and "Photos", set a name of the created folder to "Folder B", and display an icon "Folder B" representing the created folder in a region outside the parent folder "Folder A" as illustrated in FIG. 7D.

On the other hand, if it is determined in step 527 that the cancellation (e.g., not doing) the folder creation and the folder separation is decided according to the user control, the portable terminal proceeds to step 535. In step 535, the portable terminal restores the icons moved according to the user touch-and-drag, to initial states. For example, the portable terminal displays the initially selected icon and the additionally selected icons in initial positions as illustrated in FIG. 6A.

The above description has been made for, at folder creation for a plurality of icons within a specific folder, requesting a user to select one of folder creation and folder separation and then, according to user selection, creating a new folder inside the specific folder or creating a new folder outside the specific folder. However, because the folder creation and the folder separation are different in that a folder to be created is positioned inside or outside the specific folder, exemplary embodiments of the present invention will be able to request the user to set a folder creation position according to a design scheme.

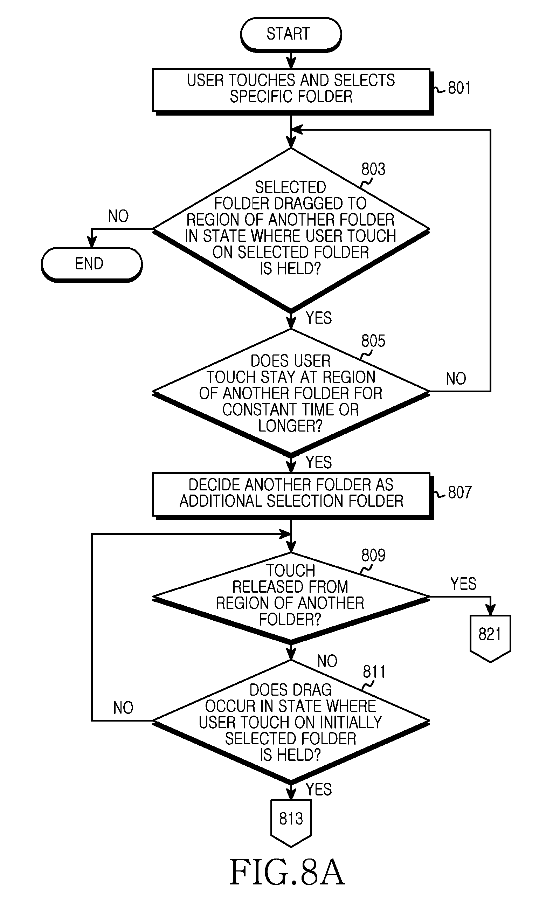

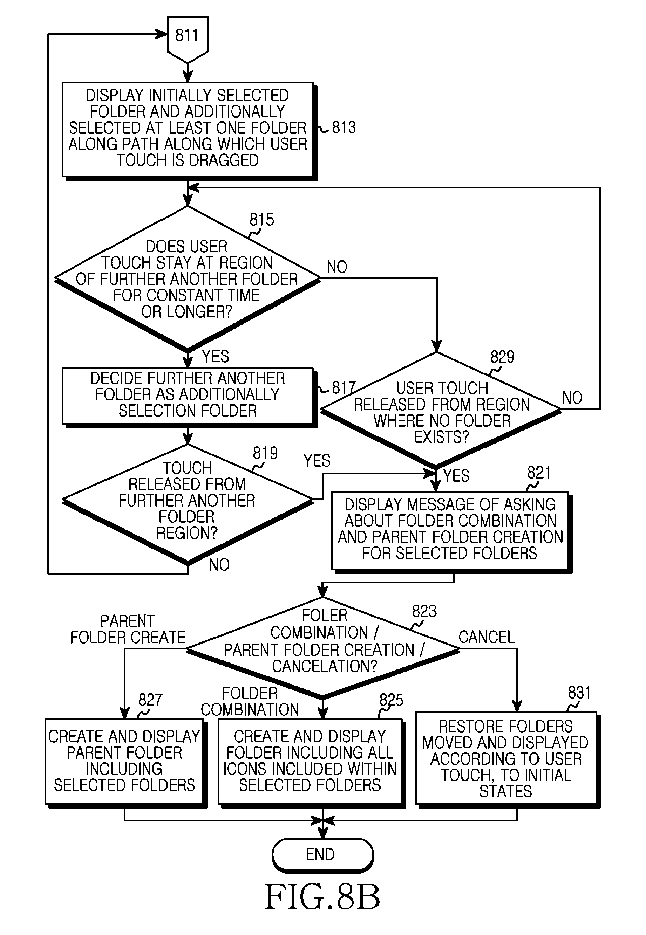

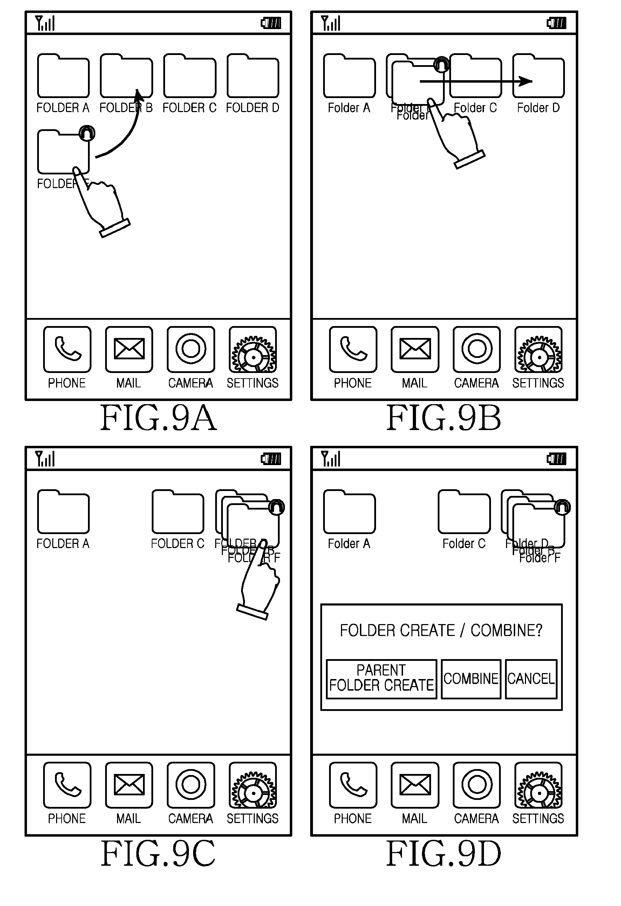

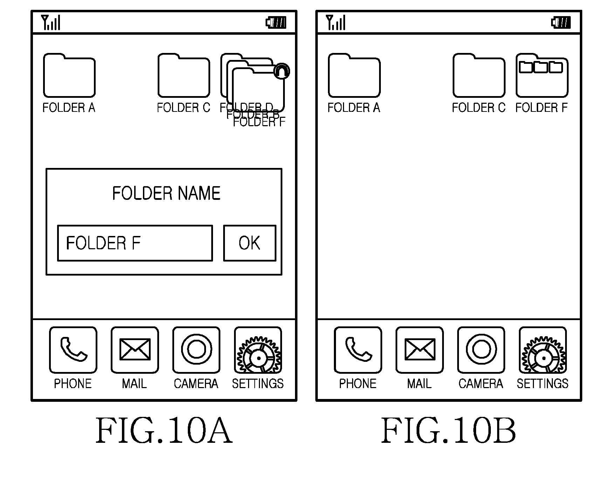

FIGs. 8A and 8B illustrate a procedure of combining folders in a portable terminal according to another exemplary embodiment of the present invention. Also, FIGs. 9 and 10 illustrate a screen configuration of showing a combination of folders in a portable terminal according to an exemplary embodiment of the present invention. The following description is made for the operation procedure of the portable terminal illustrated in FIGs. 8A and 8B by way of an example of FIGs. 9 and 10.

As illustrated in FIGs. 8A and 8B, if a user touches and selects a specific folder (or folder icon) in step 801, the portable terminal proceeds to step 803. In step 503, the portable terminal determines whether the selected folder is dragged to a region of another folder in a state in which the user touch on the selected folder is held. For example, the portable terminal determines whether, after the user touches "Folder E" as illustrated in FIG. 9A, the user drags the "Folder E" to a region at which "Folder B" has been displayed as illustrated in FIG. 9B. If it is determined in step 803 that the selected folder is not dragged to the region of the another folder, the portable terminal terminates an algorithm according to exemplary embodiments of the present invention.

In contrast, if it is determined in step 803 that the selected folder is dragged to the region of the another folder, the portable terminal proceeds to step 805. In step 805, the portable terminal determines whether the user touch stays at the region of the another folder for a constant time or longer. For example, the portable terminal determines whether the user stays for a preset threshold time or longer in a state in which the user drags the "Folder E" to the region at which the "Folder B" has been displayed as illustrated in FIG. 9B. If it is determined in step 805 that the user touch does not stay at the region of the another folder for the constant time or longer, the portable terminal returns to step 803 and again performs the subsequent steps. For example, when the user drags the "Folder E" and just passes without staying at the region at which the "Folder B" has been displayed, the portable terminal can determine whether the user drags the "Folder E" to a region at which a further another folder has been displayed.

In contrast, if it is determined in step 805 that the user touch stays at the region of the another folder for the constant time or longer, the portable terminal proceeds to step 807. In step 807, the portable terminal decides the another folder as an additional selection folder.

After that, the portable terminal proceeds to step 809. In step 809, the portable terminal determines whether the user touch is released from the region of the another folder. If it is determined in step 809 that the user touch is released from the region of the another folder, the portable terminal goes directly to step 821 below.

In contrast, if it is determined in step 809 that the user touch is not released from the region of the another folder, the portable terminal proceeds to step 811. In step 811, the portable terminal determines whether drag occurs in a state in which the user touch on the initially selected folder is held. For example, the portable terminal determines whether drag occurs again to a further another region in the state in which the user drags the "Folder E" to the region at which the "Folder B" has been displayed as illustrated in FIG. 9B. If it is determined in step 811 that the drag does not occur in the state in which the user touch on the initially selected folder is held, the portable terminal returns to step 809 and again performs the subsequent steps.

In contrast, if it is determined in step 811 that the drag occurs in the state in which the user touch on the initially selected folder is held, the portable terminal proceeds to step 813 and moves and displays the initially selected folder and the additionally selected at least one folder along a path along which the user touch is dragged. For example, when drag again occurs in an arrow direction in the state in which the user drags the "Folder E" to the region at which the "Folder B" has been displayed as illustrated in FIG. 9B, the portable terminal can move and display the initially selected "Folder E" and the additionally selected "Folder B" according to a drag position as illustrated in FIG. 9C.

Next, the portable terminal proceeds to step 815. In step 815, the portable terminal determines whether the user touch stays at a region of a further another folder for a constant time or longer. For example, the portable terminal determines whether the user stays for a preset threshold time or longer in a state in which the user drags the "Folder E" and the "Folder B" to a region at which "Folder D" has been displayed as illustrated in FIG. 9C. If it is determined in step 815 that the user touch does not stay at the region of the further another folder for the constant time or longer, the portable terminal proceeds to step 829. In step 829, the portable terminal determines whether the user touch is released from a region at which no folder has been displayed. At this time, if the user touch is not released from the region at which no folder has been displayed, the portable terminal returns to step 815 and again performs the subsequent steps while, if the user touch is released from the region at which no folder has been displayed, the portable terminal goes directly to step 821.

In contrast, if it is determined in step 815 that the user touch stays at the region of the further another folder for the constant time or longer, the portable terminal proceeds to step 817. In step 817, the portable terminal decides the further another folder as an additional selection folder. For example, when the user drags the "Folder E" and the "Folder B" to the region at which the "Folder D" has been displayed and stays for a preset threshold time or longer, the portable terminal decides that the "Folder D" is additionally selected, further to the initially selected "Folder E" and the additionally selected "Folder B".

After that, the portable terminal proceeds to step 819. In step 819, the portable terminal determines whether the user touch is released from the further another folder region. If it is determined in step 819 that the user touch is not released from the further another folder region, the portable terminal returns to step 811 and again performs the subsequent steps.

In contrast, if it is determined in step 819 that the user touch is released from the further another folder region, the portable terminal proceeds to step 821. In step 821, the portable terminal displays a message of asking about whether to create a parent folder for the selected folders or whether to combine the selected folders. Next, in step 823, the portable terminal determines whether parent folder creation is decided, if folder combination is decided or if cancellation is decided according to user control. For example, as illustrated in FIG. 9D, the portable terminal can display a message of requesting a user to decide parent folder creation, folder combination or cancellation at a time the user touch is released.

If it is determined in step 823 that the parent folder creation is decided according to the user control, the portable terminal proceeds to step 827. In step 827, the portable terminal creates a new folder including all the selected folders, and displays an icon representing the created folder. At this time, to set a name of the created folder, the portable terminal can display a message of requesting name setting to a user. Particularly, the portable terminal can temporarily set a name of a folder to be created on a basis of a name of the initially selected folder. For example, by adding a preset numeral, character, or symbol to the name of the initially selected folder or changing a numeral, character or symbol included in the name of the initially selected folder, the portable terminal can temporarily set the name of the folder to be created. For example, as illustrated in FIG. 10A, because the name of the initially selected folder is "Folder E", the portable terminal can temporarily set a name of a folder to be newly created to "Folder F" and then, display a folder name setting window including the "Folder F". At this time, if the user decides to create a folder in the name of "Folder F", the portable terminal can create a folder including the "Folder E", "Folder B", and "Folder D", set a name of the created folder to "Folder F", and display the "Folder F" as illustrated in FIG. 10B. At this time, an icon representing the created folder can be displayed in the region of the last selected folder or the region at which the user touch is released, or can be displayed successively or randomly in a region at which no icon has been displayed.

In contrast, if it is determined in step 823 that the folder combination is decided according to the user control, the portable terminal proceeds to step 825. In step 825, the portable terminal creates a new folder including all icons included within all the selected folders, and displays an icon representing the created folder. At this time, to set a name of the created folder, the portable terminal can display a message of requesting name setting to a user. Particularly, the portable terminal can temporarily set a name of a folder to be created on a basis of a name of the initially selected folder. For example, by adding a preset numeral, character, or symbol to the name of the initially selected folder or changing a numeral, character or symbol included in the name of the initially selected folder, the portable terminal can temporarily set the name of the folder to be created.

On the other hand, if it is determined in step 823 that the cancellation not doing the patent folder creation and the folder combination is decided according to the user control, the portable terminal proceeds to step 831. In step 831, the portable terminal restores the folders moved according to the user touch-and-drag, to initial states. For example, the portable terminal displays the initially selected folder and the additionally selected folders in initial positions as illustrated in FIG. 10A.

The aforementioned description has been made for continuously touching a plurality of application icons to create a folder or separate the icons, and continuously touching a plurality of folders to create a parent folder or combine the folders. However, this does not intend to limit the scope and spirit of the present invention, and exemplary embodiments of the present invention will be able to, after continuously touching a plurality of application icons, touch a folder without releasing the touch and put the plurality of touched application icons in the touched folder. Also, it shall be possible to continuously touch at least one application icon and at least one folder and create a new folder as well.

Also, the above description has been made for, at a time the user touch is released, displaying a folder icon including corresponding icons. However, this does not intend to limit the scope and spirit of the present invention and, when a plurality of icons are selected according to a user touch-and-drag, exemplary embodiments of the present invention will be able to display a folder icon including the plurality of icons and inform a user that it is in a state of being capable of creating the displayed folder.

Methods according to exemplary embodiments disclosed in claims and/or the specification of the present invention can be implemented in hardware, software, or a form of combination thereof.

In case of implementing in software, a computer readable storage medium storing one or more programs (i.e., software modules) can be provided. One or more programs stored in the computer readable storage medium are configured to be executable by one or more processors within an electronic device such as a portable terminal. One or more programs include instructions for enabling the electronic device to execute the methods according to the exemplary embodiments disclosed in the claims and/or the specification of the present invention.

These programs (i.e., software modules or software) can be stored in a Random Access Memory (RAM), a nonvolatile memory including a flash memory, a Read Only Memory (ROM), an Electrically Erasable Programmable ROM (EEPROM), a magnetic disk storage device, a compact disk ROM (CD-ROM), a Digital Versatile Disk (DVD) or an optical storage device of other form, and a magnetic cassette. Or, they can be stored in a memory constructed in a combination of some or all of them. Also, each construction memory may be included in plural.

Further, the programs can be stored in a storage device attachable to an electronic device and accessible through a communication network such as the Internet, an intranet, a Local Area Network (LAN), a Wireless LAN (WLAN), or a Storage Area Network (SAN), or a communication network configured in a combination of them. This storage device can access the electronic device through an external port.

Furthermore, a separate storage device on a communication network may access a portable electronic device.

As described above, exemplary embodiments of the present invention has an effect that a user can manage icons intuitively, by creating a folder including a plurality of icons, combining a folder and a folder, and separating a plurality of icons within a folder and creating a separate folder including the icons through one-time touch operation in a portable terminal.

While the invention has been shown and described with reference to certain exemplary embodiments thereof, it will be understood by those skilled in the art that various changes in form and details may be made therein without departing from the spirit and scope of the invention as defined by the appended claims and their equivalents.

## Claims

1. A method for managing icons in a portable terminal, the method comprising:
detecting a touch of an icon by a user;
detecting a drag of the icon in a state in which the touch is maintained;
selecting at least one icon positioned in a path along which the icon is dragged;
creating a folder comprising the icon touched by the user and the selected at least one icon; and
displaying an icon representing the created folder.

2. The method of claim 1, wherein the selecting of the at least one icon positioned in the path along which the icon is dragged comprises:
determining whether the icon is dragged to a display region of another icon in the state in which the touch is held;
determining whether the icon stays at the display region of the another icon for a threshold time or longer; and
if the icon stays for the threshold time or longer, selecting the another icon.

3. The method of claim 1, wherein the selecting of the at least one icon positioned in the path along which the icon is dragged comprises:
determining whether the user touch is released; and
until before the user touch is released, selecting a plurality of icons positioned in the path along which the icon is dragged.

4. The method of claim 1, further comprising moving and displaying the icon touched by the user and the selected at least one icon, along the path along which the icon is dragged.

5. The method of claim 1, wherein the creating of the folder comprising the icon touched by the user and the selected at least one icon comprises:
determining whether a parent folder for the icon touched by the user and the selected at least one icon exists;
if the parent folder exists, deciding a folder creation position; and
creating a folder comprising the icon touched by the user and the selected at least one icon, inside the parent folder or outside the parent folder according to user control.

6. The method of claim 1, further comprising setting a name of the folder to be created,
wherein the name of the folder is set using at least one of a name of the icon touched by the user, a name of the selected at least one icon, and a name of a parent folder for the selected icons.

7. The method of claim 1, comprising, until before the user touch is released, changing the icon touched by the user into an icon representing that portable terminal is operating in an icon management mode and displaying the changed icon.

8. An apparatus for managing icons in a portable terminal, the apparatus comprising:
a touch sensor for sensing a user's touch operation;
a display unit for displaying at least one icon; and
a controller for controlling to sense a touch of an icon by the user through touch sensor, to sense a drag of the icon in a state in which the touch is held, to select at least one icon positioned in a path along which the icon is dragged, to create a folder comprising the icon touched by the user and the selected at least one icon, and to display an icon representing the created folder.

9. The apparatus of claim 8, wherein the controller determines whether the icon is dragged to a display region of another icon in the state in which the touch is held, determines whether the icon stays at the display region of the another icon for a threshold time or longer, and, if the icon stays for the threshold time or longer, selects the another icon.

10. The apparatus of claim 8, wherein the controller determines whether the user touch is released and, until before the user touch is released, selects a plurality of icons positioned in the path along which the icon is dragged.

11. The apparatus of claim 8, wherein the controller controls a function of moving and displaying the icon touched by the user and the selected at least one icon, along the path along which the icon is dragged.

12. The apparatus of claim 8, wherein the controller determines whether a parent folder for the icon touched by the user and the selected at least one icon exists,
wherein if the parent folder exists, the controller decides a folder creation position, and creates a folder comprising the icon touched by the user and the selected at least one icon, inside the parent folder or outside the parent folder according to user control.

13. The apparatus of claim 8, wherein the controller sets the name of the folder to be created using at least one of a name of the icon touched by the user, a name of the selected at least one icon, and a name of a parent folder for the selected icons.

14. The apparatus of claim 8, wherein the controller controls a function of, until before the user touch is released, changing the icon touched by the user into an icon representing that it is operating in an icon management mode and displaying the changed icon.

15. An electronic device, the device comprising:
means for detecting a touch of an icon by a user;
means for detecting a drag of the icon in a state in which the touch is maintained;
means for selecting at least one icon positioned in a path along which the icon is dragged; and
means for displaying an icon representing a created folder comprising the icon touched by the user and the selected at least one icon.
